(19) Europäisches Patentamt
European Patent Office
Office européen des brevets

(11) EP 0 875 857 B1

(12) # EUROPÄISCHE PATENTSCHRIFT

(45) Veröffentlichungstag und Bekanntmachung des Hinweises auf die Patenterteilung:
**21.08.2002 Patentblatt 2002/34**

(51) Int Cl.⁷: **G06T 9/00**

(21) Anmeldenummer: **98107547.6**

(22) Anmeldetag: **24.04.1998**

(54) **Verfahren zum Detektieren und Quantifizieren von Bildveränderungen eines Videobildes, das mit einem blockbasierten, datenreduzierenden Video-Code verarbeitet ist**

Method for detection and quantification of image modifications in a video image processed by a block-based data-reducing video-code

Méthode de détection et de quantification de modifications d'image dans une image vidéo traitée par un code vidéo de réduction de données formé de blocs

(84) Benannte Vertragsstaaten:
**DE FR GB IT**

(30) Priorität: **29.04.1997 DE 19718063**

(43) Veröffentlichungstag der Anmeldung:
**04.11.1998 Patentblatt 1998/45**

(73) Patentinhaber: **Rohde & Schwarz GmbH & Co. KG**
**D-81671 München (DE)**

(72) Erfinder: **Trauberg, Markus**
**38159 Vechelde (DE)**

(74) Vertreter: **Graf, Walter, Dipl.-Ing. et al**
**Mitscherlich & Partner**
**Patent- u. Rechtsanwälte,**
**Sonnenstrasse 33**
**80331 München (DE)**

(56) Entgegenhaltungen:
**EP-A- 0 571 171** **EP-A- 0 723 375**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 875 857 B1

## Beschreibung

Die Erfindung betrifft ein Verfahren laut Oberbegriff des Hauptanspruches.

Bei der Übertragung und Speicherung von digitalen Videobildern werden in zunehmendem Maße datenreduzierende Codierverfahren verwendet. Dabei haben insbesondere Codierverfahren, die als grundlegenden Codierungsschritt eine blockbasierte Diskrete-Cosinus-Transformation (DCT) durchführen, große Verbreitung gefunden. Zu ihnen gehören die Codierverfahren JPEG, MPEG-1 und MPEG-2. Sie nutzen sowohl die in einem Bild enthaltene Redundanz als auch die Eigenschaften der menschlichen, visuellen Wahrnehmung aus, um die zur Darstellung notwendige Datenmenge zu reduzieren (siehe beispielsweise (nach ISO/IEC 11172 (1993) "Information technology: Coding of moving pictures- and associated audio for digital storage media at up to about 1,5 Mbit/S" und ISO/IEC 13818-2 "Information technology: Generic coding of Moving pictures and associated audio information: video").

Neben der Redundanz-Reduktion und Irrelevanz-Reduktion kann es bei einem solchen Codier- und Decodiervorgang eines Videobildes je nach Vorlage, Coderarbeitsweise und eingestellten Codierparametern im decodierten Bild zu sichtbaren Veränderungen gegenüber dem Originalbild kommen.

Aus der EP 0 723 375 A2 ist ein Nachbearbeitungsverfahren zum Verringern eines Bildfehlers bekannt, der aufgrund der Rekonstruktion einer Bildinformation aus einem mittels blockbasierter Transformation gepackten Bildes entsteht. Zur Minimierung der Artefacte an den Blockgrenzen wird eine vorbestimmte diskrete Cosinus Transformation (DCT) durchgeführt, wobei zur Abschätzung der Transformationskoeffizienten die durch Quantisierung oder inverse Quantisierung verlorene Information berücksichtigt wird, um eine größtmögliche Stetigkeit an den Blockgrenzen zu erreichen. Die Rücktransformation erfolgt auf Basis der abgeschätzten Transformationskoeffizienten und ergänzt das mittels eines Umkehrtransformationsvorgangs rekonstruierte Bildsignal mit dem so erhaltenen Berichtigungswert.

Einen Einfluß auf das resultierende Bildsignal haben beispielsweise folgende Parameter:

die blockbasierte Transformation in den Frequenzbereich (DCT) mit anschließender Quantisierung der DCT-Koeffizienten

die makroblockbasierte Bewegungskompensation (nur MPEG) und

die zeitlich differentielle Codierung (nur MPEG)

Bei der blockbasierten Transformation mittels der DCT erfolgt die Darstellung des Bildinhaltes nach der Transformation durch Koeffizienten als Maß für das Auftreten eines DCT-Basismusters im Bildinhalt des Blockes. In natürlichen Bildern/Bildsequenzen treten nach der Transformation hohe Ortsfrequenzen statistisch durchschnittlich mit einer geringeren Amplitude als niedrige Ortsfrequenzen auf. Der Quantisierungsfaktor bei der anschließenden Quantisierung ist von der angestrebten Datenrate bzw. Bildqualität abhängig. Zur Reduzierung der nach der Codierung resultierenden Datenmenge wird der Quantisierungsfaktor vielfach erhöht. Das hat eine gröbere Quantisierung zur Folge. Der erwünschte Effekt dieser Technik ist die Reduzierung der Anzahl der Bits, die zur Darstellung eines Koeffizienten nötig ist. Zudem wirkt es sich vorteilhaft aus, wenn nach der Quantisierung die Koeffizienten mit geringer Amplitude auf Null reduziert werden und sich damit bei der anschließenden Variablen-Längen-Codierung besonders effizient codieren lassen. Im Ortsbereich resultiert daraus eine Dämpfung der hohen Frequenzen innerhalb des codierten Blockes. Verstärkt wird dieser Effekt durch die Einführung einer Quantisierungsmatrix, deren Koeffizienten die Quantisierung für jede Ortsfrequenz getrennt beeinflussen können. Zur Adaption an die Eigenschaften der menschlichen visuellen Wahrnehmung werden diese relativen Quantisierungsfaktoren üblicherweise zu höheren Ortsfrequenzen hin ansteigend gewählt, was den Effekt der Dämpfung hoher Ortsfrequenzen innerhalb der codierten Blöcke noch verstärkt.

Statistisch ergibt sich aus dieser Technik bei der Codierung natürlicher Bilder/Bildsequenzen mit hoher Wahrscheinlichkeit eine Reduzierung bzw. sogar Eliminierung feiner Strukturen und Details im Ortsbereich des jeweiligen codierten Blockes. Der Grad der Reduktion ist abhängig von dem Bildinhalt, von der gewählten absoluten Quantisierung des Blockes und der relativen Quantisierung der unterschiedlichen Ortsfrequenzen, die durch die Quantisierungsmatrix festgelegt wird. In einzelnen Blöcken kann jedoch auch der gegenteilige Effekt auftreten. Beispielsweise kann ein Block eine Kante enthalten, die nach der Transformation in den Frequenzbereich durch eine große Koeffizientenzahl beschrieben wird. Nach der Quantisierung ist die Koeffizientenzahl deutlich reduziert, was im Ortsbereich eine Überlagerung der Kante mit einem feinen, störenden Muster zur Folge haben kann. Dieser Effekt ist jedoch statistisch wesentlich weniger Wahrscheinlich als der zuerst beschriebene.

Bei der bisher beschriebenen "Intra-Codierung" wird jeder Block , der bei JPEG und MPEG jeweils aus 8*8 Bildpunkten besteht, separat transformiert und quantisiert. An den Grenzen benachbarter Blöcke können bei grober Quantisierung "Unstetigkeiten" im Bildinhalt entstehen. Aus dem Kontext des Bildinhaltes ist dann zu erkennen, daß entweder die Inhalte der Blöcke deutlich unterschiedlich sind, obwohl sie ursprünglich einen ähnlichen Inhalt hatten, oder daß ein relativ kontinuierlicher Inhalt in deutlich voneinander abgesetzte Bereiche zertrennt wird. In dem letztgenannten, wiederum statistisch wahrscheinlicheren Fall ist die Differenz zwischen den Werten zweier benachbarter Bildpunkte über die Blockgrenze hinweg statistisch größer als die Differenz der Werte zweier benachbarter Bildpunkte innerhalb eines Blockes.

Die bisher beschriebenen Eigenschaften gelten für die Codierung der Luminanz und der Chrominanzkomponenten. Bei der Darstellung der Chrominanz im Farbformat "4:2:2" oder "4:2:0" haben die Chrominanzblöcke im Vergleich eine größere Ausdehnung als die Luminanzblöcke. Die grundsätzlichen Eigenschaften der Codierung bleiben davon unberührt.

Die Codierverfahren nach MPEG-1 und MPEG-2 bieten neben der Intra-Codierung auch die Möglichkeit, Ähnlichkeiten zeitlich benachbarter Bilder durch differentielle Codierung auszunutzen.

Für die Bewegungskompensation in unidirektional und bidirektional prädizierten Bildern (P- bzw. B-Bildern) werden mit geeigneten Verfahren ähnliche Bildinhalte in Referenzbildern gesucht. Dabei werden die Bildinhalte von 16*16 Bildpunkten großen Bereichen, sogenannten Makroblöcken verglichen. Der Inhalt des Refernzbildes entspricht dem Inhalt, der nach einer Decodierung auch dem Decoder zur Verfügung steht, er ist also bereits quantisiert. Die Chrominanz wird üblicherweise bei den implementierten Suchalgorithmen nicht berücksichtigt. Findet der Suchalgorithmus einen geeigneten Makroblock, wird dieser als Basis für den zu codierenden verwendet. Die verbleibende Differenz zwischen prädiziertem und zu codierendem Bildinhalt kann zusätzlich codiert werden. Im Ergebnis der Ausnutzung der zeitlichen Korrelation durch Bewegungskompensation und differentielle Codierung können folgende Effekte auftreten:

Die Blockkanten aus dem Referenzbild können an beliebiger Lage im zu codierenden Block auftreten, d.h. sie treten nicht unbedingt im Blockraster auf.

Eine Zusätzliche Codierung der Differenzen kann bei grober Quantisierung neue Blockkanten im Blockraster hervorrufen. Dies ist der Effekt der auch in I-Bildern auftritt.

Der Bildinhalt an den Makroblockkanten wird gegenüber dem restlichen Blockinhalt bei der Bewegungsschätzung nicht gesondert betrachtet. Bei nur mäßig übereinstimmenden Bildinhalten zwischen Referenz und aktuellem Inhalt und keiner weiteren Codierung der Differenzen (also wenn die Datenrate sehr knapp ist) kann es zu deutlich sichtbaren Makroblockgrenzen kommen.

Durch eine Prädiktion in Halbpixelgenauigkeit und die dazu erforderliche Filterung kann es zu einer Dämpfung der hohen Frequenzanteile des Blockes kommen.

Bei der bidirektionalen Prädiktion ist eine Interpolation der beiden Referenzblöcke erforderlich. Hohe Frequenzanteile werden wiederum gedämpft.

Da die Chrominanzkomponenten bei der Bewegungsschätzung meist nicht berücksichtigt werden, ist es sehr wahrscheinlich, daß an den Makroblockkanten die Inhalte benachbarter Makroblöcke hinsichtlich der Chrominanz nicht "zusammenpassen".

Aus den Betrachtungen folgt, daß eine statistisch sehr wahrscheinliche Folge einer Codierung mit relativ geringer Datenrate eine Reduktion des Energieinhaltes innerhalb der Codierungsblöcke ist. An den Block- und Makroblockgrenzen hingegen ist eine statistisch geringere Reduktion als innerhalb der Blöcke bzw. sogar eine Erhöhung der Differenz zwischen den Werten benachbarter Bildpunkte zu erwarten.

Es ist Aufgabe der Erfindung, ein einfaches Verfahren aufzuzeigen, mit dem solche Bildveränderungen eines Videobildes, das mit in einem blockbasierten, datenreduzierenden Video-Coder verarbeitet wurde, detektiert und quantifiziert werden können, ohne daß das Original-Videobild bekannt ist.

Diese Aufgabe wird ausgehend von einem Verfahren laut Oberbegriff des Hauptanspruches durch dessen kennzeichnende Merkmale gelöst. Vorteilhafte Weiterbildungen ergeben sich aus den Unteransprüchen.

Das erfindungsgemäße Verfahren macht sich die Eigenschaft der bekannten Block-Codierverfahren zur Datenreduktion zunutze, daß die Bildpunkte eines Blockes gemeinsam und unabhängig von den Bildpunkten der benachbarten Blöcke verarbeitet werden. Damit ist es nur noch erforderlich, jeweils die Differenz der Digitalwerte der horizontal benachbarten Bildpunkte bzw. eventuell zusätzlich auch noch der vertikal benachbarten Bildpunkte zu bestimmen und zwar vorzugsweise für die Luminanz- und Chrominanzkomponenten jeweils getrennt. Bezogen auf konkrete Bildpunkte ergibt sich zwar ein stark vom aktuellen Bildinhalt abhängiger Wert. Faßt man jedoch die Werte für sämtliche Punkte eines Bildes im Abstand des Blockrasters zusammen, so erhält man je acht Werte pro Komponente und Richtung, also eine statistische Mittelung über ein gesamtes Bild. Die Werte, welche die Übergänge an den Blockgrenzen beschreiben, heben sich bei Erfüllung der Voraussetzungen von den übrigen Werten vom Betrag her ab. Die Differenz zwischen den Werten innerhalb der Blöcke und dem Wert an der Blockgrenze liefert einen Aufschluß über die Bildeigenschaften und ist ein Maß für die Veränderung durch die Codierung.

Das zu untersuchende Videobild kann entweder noch codiert oder bereits decodiert vorliegen, es ist lediglich erforderlich, daß das Blockraster der Codierung bekannt ist. Unter Videobild wird entweder ein ganzes Bild oder gegebenenfalls auch nur ein Teil eines ganzen Bildes verstanden.

Für das erfindungsgemäße Verfahren ist kein Wissen über das ursprüngliche Videobild erforderlich, es genügt nur die Auswertung des (ehemals) blockcodierten Video-Signals. Durch die Berechnung von mehreren unabhängigen Parametern wird eine statistisch große Unabhängigkeit gegenüber dem Originalbild erreicht. Mit dem erfindungsgemäßen Verfahren ist nicht nur eine Detektion von signifikanten Bildeigenschaften möglich, sondern auch eine Quantifizierung des Codierungsergebnisses.

Der sich aus dem Vergleich ergebende Wert, der ein Maß für die Bildveränderung ist, kann auf beliebige Art und Weise dem Benutzer angezeigt werden, beispielsweise über eine einfache Maßskala, wie sie zwischenzeitlich im Videobereich für subjektive Testergebnisse zur Darstellung von Bildveränderungen üblich sind. Dabei können die getrennt für Luminanz und Chrominanz ermittelten Werte getrennt oder zusammengefaßt angezeigt und dargestellt werden.

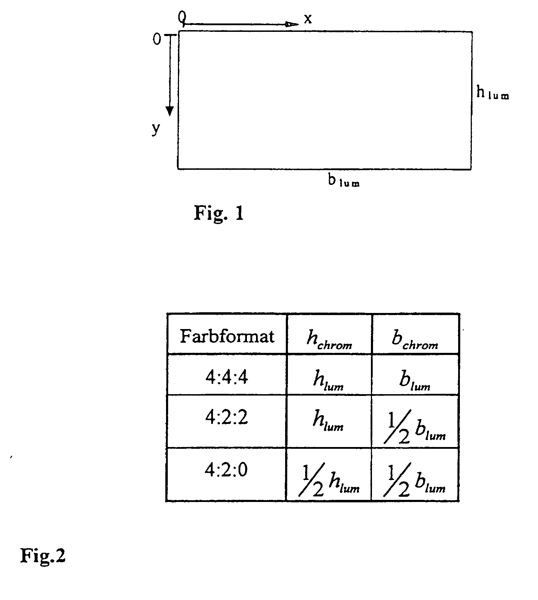

Das erfindungsgemäße Verfahren basiert auf folgenden im Zusammenhang mit den Fig. 1 und 2 dargestellten Prinzip:

Die Koordinaten des zu untersuchenden Bildes sind in Fig. 1 dargestellt. Der Ursprung liegt in der linken oberen Ecke. Die Luminanzkomponente des Bildes hat in der Horizontalen $b_{lum}$ Bildpunkte mit den Koordinaten $0.. b_{lum} -1$ und in der Vertikalen $h_{lum}$ Bildpunkte mit den Koordinaten $0 .. h_{lum} -1$.

Die Differenzen benachbarter Bildpunkte werden in Abhängigkeit der Position der Bildpunkte zu den Blockgrenzen zusammengefaßt und gemittelt. Für die Luminanz entstehen so 8 Werte für die horizontale und 8 Werte für die Vertikale Richtung, die ein Bild beschreiben. Der entsprechende Parameter hat die Bezeichnung *AD* für *Average Difference.* Der Index *i* gibt die Lage zur Blockgrenze an. *i=0* bezeichnet die Position an der Blockgrenze. Alle anderen Werte sind Differenzen innerhalb der Blöcke. Für die Berechnung des Durchschnitts der Differenz an einer Rasterlage werden die Beträge der einzelnen Differenzen summiert und anschließend der resultierende Wert durch die Anzahl der Differenzen geteilt. Da an der Position "0" kein Nachbarpunkt mit der Position "-1" vorhanden ist, wird die jeweils erste Blockreihe in Richtung der Auswertung ausgespart. Folgende Gleichungen beschreiben die Berechnungen. Sie beziehen sich auf eine Blockgröße von 8*8 Bildpunkten. $h_{lum}$ und $b_{lum}$ sind jeweils ganzzahlige Vielfache der Blockdimension.

Luminanz in horizontaler Richtung:

$$AD_{lum,h}(i) = \frac{1}{\left(\frac{b_{lum}}{8} - 1\right) h_{lum}} \sum_{x=1}^{(b_{lum}/8)-1} \sum_{y=0}^{h_{lum}-1} \left[\left| lum(8x+i, y) - lum(8x+i-1, y)\right|\right]$$

$$i = 0,1,2..7$$

Luminanz in vertikaler Richtung:

$$AD_{lum,v}(i) = \frac{1}{b_{lum}\left(\frac{h_{lum}}{8} - 1\right)} \sum_{x=0}^{b_{lum}-1} \sum_{y=1}^{(h_{lum}/8)-1} \left[\left| lum(x, 8y+i) - lum(x, 8y+i-1)\right|\right]$$

$$i = 0,1,2..7$$

mit:

*lum*(*k*,*l*): Luminanzwert des Bildpunktes mit den Koordinaten *x=k, y=l*.

Als Referenzwert wird der Durchschnitt der 7 Werte für die Positionen innerhalb der Blöcke gemittelt:

$$\overline{AD_{lum,h7}} = \frac{1}{7} \cdot \sum_{i=1}^{7} AD_{lum,h}(i)$$

$$\overline{AD_{lum,v7}} = \frac{1}{7} \cdot \sum_{i=1}^{7} AD_{lum,v}(i)$$

Die Differenz zwischen den Parametern an der Blockgrenze zu diesem Wert eliminiert den Einfluß des Bildinhaltes und gilt als Maß für die Veränderung des Bildinhaltes durch die Codierung:

$$AD_{lum,h} = AD_{lum,h}(0) - \overline{AD_{lum,h7}}$$

$$AD_{lum,v} = AD_{lum,v}(0) - \overline{AD_{lum,v7}}$$

Für die Chrominanz ergeben sich analoge Berechnungen. In der Tabelle nach Fig.2 sind die Dimensionen der Chrominanzkomponenten bei unterschiedlichen Farbformaten gegenübergestellt. Eine etwaige Unterabtastung im Format "4:2:2" oder "4:2:0" muß dabei lediglich in der Dimension des betrachteten Bildes berücksichtigt werden.

Die Blockgrenze wird jeweils mit $i=0$ beschrieben.

Folgende Gleichungen werden benutzt:

$$AD_{cb,h}(i) = \frac{1}{\left(b_{chrom}/8 - 1\right) h_{chrom}} \sum_{x=1}^{\left(b_{chrom}/8\right)-1} \sum_{y=0}^{h_{chrom}-1} \left[\left|cb(8x+i,y) - cb(8x+i-1,y)\right|\right]$$

i=0,1,2..7

$$AD_{cb,v}(i) = \frac{1}{b_{chrom}\left(h_{chrom}/8 - 1\right)} \sum_{x=0}^{b_{chrom}-1} \sum_{y=1}^{\left(h_{chrom}/8\right)-1} \left[\left|cb(x,8y+i) - cb(x,8y+i-1)\right|\right]$$

i=0,1,2..7

mit:

$cb(k,l)$: Crominanzwert der Komponente cb des Bildpunktes mit den Koordinaten $x=k$, $y=l$ in der Matrix der Chrominanz.

$$AD_{cr,h}(i) = \frac{1}{\left(b_{chrom}/8 - 1\right) h_{chrom}} \sum_{x=1}^{\left(b_{chrom}/8\right)-1} \sum_{y=0}^{h_{chrom}-1} \left[\left|cr(8x+i,y) - cr(8x+i-1,y)\right|\right]$$

i=0,1,2..7

$$AD_{cr,v}(i) = \frac{1}{b_{chrom}\left(h_{chrom}/8 - 1\right)} \sum_{x=0}^{b_{chrom}-1} \sum_{y=1}^{\left(h_{chrom}/8\right)-1} \left[\left|cr(x,8y+i) - cr(x,8y+i-1)\right|\right]$$

i=0,1,2..7

mit:

*cr*(*k*,*l*): Crominanzwert der Komponente cr des Bildpunktes mit den Koordinaten $x = k$, $y=l$ in der Matrix der Chrominanz.

Die Referenzwerte berechnen sich analog zu denen der Luminanz:

$$\overline{AD_{cb,h7}} = \frac{1}{7} \cdot \sum_{i=1}^{7} AD_{cb,h}(i)$$

$$\overline{AD_{cb,v7}} = \frac{1}{7} \cdot \sum_{i=1}^{7} AD_{cb,v}(i)$$

$$\overline{AD_{cr,h7}} = \frac{1}{7} \cdot \sum_{i=1}^{7} AD_{cr,h}(i)$$

$$\overline{AD_{cr,v7}} = \frac{1}{7} \cdot \sum_{i=1}^{7} AD_{cr,v}(i)$$

Als Maß für die Veränderung des Bildinhaltes durch die Codierung gilt wiederum die Differenz zwischen dem jeweiligen Parameter an der Blockgrenze zu dem entsprechenden Referenzwert:

$$AD_{cb,h} = AD_{cb,h}(0) - \overline{AD_{cb,h7}}$$

$$AD_{cb,v} = AD_{cb,v}(0) - \overline{AD_{cb,v7}}$$

$$AD_{cr,h} = AD_{cr,h}(0) - \overline{AD_{cr,h7}}$$

$$AD_{cr,v} = AD_{cr,v}(0) - \overline{AD_{cr,v7}}$$

Mit dem Verfahren lassen sich pro Farbbild 6 Parameter berechnen, die Aufschluß über die Bildveränderungen durch die Codierung geben.

Für eine Anzeige der Berechnungsergebnisse können die Parameter zu einem numerischen Wert pro Bild zusammengefaßt werden. Da jeder Wert für sich eine Veränderung anzeigt, ist eine Maximalwertermittlung sinnvoll. Zeitlich bieten sich die Tiefpaßfilterung und die Spitzenwertgleichrichtung an, um dem Parameter eine geringere zeitliche Varianz zu geben.

**Patentansprüche**

1. Verfahren zum Detektieren und Quantifizieren von Bildveränderungen eines Videobildes, das mit einem blockbasierten, datenreduzierenden Codierverfahren verarbeitet ist,
   **dadurch gekennzeichnet,**

   **daß** die Differenz der Amplitudenwerte der horizontal und/oder vertikal benachbarten Bildpunktpaare des Videobildes bestimmt wird,
**daß** für alle in Bezug auf die vertikalen Blockgrenzen jeweils gleichliegende horizontale Bildpunktpaare der horizontale Mittelwert dieser Differenzbeträge bestimmt wird und/oder für alle in Bezug auf die horizontalen Blockgrenzen jeweils gleichliegende vertikale Bildpunktpaare der vertikale Mittelwert dieser Differenzbeträge bestimmt wird,
**daß** dann der horizontale Durchschnitt der innerhalb der Codierblöcke liegenden horizontalen Mittelwerte bestimmt wird und/oder der vertikale Durchschnitt der innerhalb der Codierblöcke liegenden vertikalen Mittelwerte bestimmt wird,
und **daß** schließlich dieser horizontale und/oder vertikale Durchschnittswert mit dem jeweils entsprechenden horizontalen und/oder vertikalen Mittelwert der Differenzbeträge an der Blockgrenze verglichen wird.

**2.** Verfahren nach Anspruch 1,
**dadurch gekennzeichnet,**
**daß** die Ermittlung der Differenzwerte, Mittelwerte und Durchschnittswerte sowie deren Vergleich für die Luminanzkomponente und die Chrominanzkomponente getrennt erfolgt.

**3.** Verfahren nach Anspruch 1 oder 2,
**dadurch gekennzeichnet,**
**daß** das Vergleichsergebnis an einer Anzeigeeinrichtung angezeigt wird.

## Claims

**1.** Method of detecting and quantifying changes in a video picture which is processed by a block-based data-reducing coding method,
**characterised in that**
the differences in the amplitude values of pairs of horizontally and/or vertically adjacent picture points in the video picture are determined,
**in that** the horizontal average of these differences is determined for all the horizontal pairs of picture points which are in the same position with respect to the vertical block boundaries and the vertical average of these differences is determined for all the vertical pairs of picture points which are in the same position with respect to the horizontal block boundaries,
**in that** the horizontal average of the horizontal averages lying within the coding blocks is then determined and/or the vertical average of the vertical averages lying within the coding blocks is determined,
and **in that** finally this horizontal and/or vertical average is compared with the respective corresponding horizontal and/or vertical average of the differences at the block boundary.

**2.** Method according to claim 1,
**characterised in that**
the determination of the differences and averages and their comparison take place separately for the luminance component and chrominance components.

**3.** Method according to claim 1 or 2,
**characterised in that**
the result of the comparison is shown on a display or indicating means.

## Revendications

**1.** Procédé pour détecter et quantifier des modifications d'une image vidéo et modification d'une image vidéo, qui est traitée au moyen du procédé de codage qui est basé sur des blocs et réduit les données, **caractérisé en ce que** la différence entre les valeurs d'amplitude des paires, voisines horizontalement et/ou verticalement, de points de l'image vidéo est déterminée,
que pour toutes les paires horizontales de points d'image, qui sont disposés respectivement de la même manière par rapport aux limites verticales de blocs, la valeur moyenne horizontale de ces valeurs absolues de différence est déterminée et/ou que pour toutes les paires verticales de points d'image situées à une même distance par rapport aux limites horizontales de blocs, la valeur moyenne verticale de ces valeurs absolues de différences est déterminée,

qu'ensuite la moyenne arithmétique horizontale des valeurs moyennes horizontales situées à l'intérieur des blocs de codage est déterminée et/ou la moyenne arithmétique verticale des valeurs moyennes verticales situées à l'intérieur des blocs de codage est déterminée, et
qu'enfin cette valeur moyenne arithmétique horizontale et/ou cette valeur moyenne arithmétique verticale sont comparées à la valeur moyenne horizontale et/ou verticale respective correspondante des valeurs absolues de différence au niveau de la limite des blocs.

**2.** Procédé selon la revendication 1, **caractérisé en ce que** la détermination des valeurs de différences, des valeurs moyennes et des valeurs moyennes arithmétiques ainsi que leur comparaison s'effectuent séparément pour la composante de luminance et la composante de chrominance.

**3.** Procédé selon la revendication 1 ou 2, **caractérisé en ce que** le résultat de la comparaison est affiché sur un dispositif d'affichage.

0
x
0
y
$h_{lum}$
$b_{lum}$

Fig. 1

| Farbformat | $h_{chrom}$ | $b_{chrom}$ |
|---|---|---|
| 4:4:4 | $h_{lum}$ | $b_{lum}$ |
| 4:2:2 | $h_{lum}$ | $\frac{1}{2} b_{lum}$ |
| 4:2:0 | $\frac{1}{2} h_{lum}$ | $\frac{1}{2} b_{lum}$ |

Fig.2